Europäisches Patentamt

European Patent Office

Office européen des brevets

(11) Veröffentlichungsnummer: **0 262 120**
**B1**

(12) **EUROPÄISCHE PATENTSCHRIFT**

(45) Veröffentlichungstag der Patentschrift: 12.09.90

(51) Int. Cl.⁵: **H 02 P 7/00**

(21) Anmeldenummer: **86901780.6**

(22) Anmeldetag: **05.03.86**

(86) Internationale Anmeldenummer:
**PCT/DE86/00085**

(87) Internationale Veröffentlichungsnummer:
**WO 87/00363 15.01.87 Gazette 87/01**

(54) STEUERSCHALTUNG FÜR EINEN ELEKTROMOTOR.

(30) Priorität: **06.07.85 DE 3524267**

(43) Veröffentlichungstag der Anmeldung:
**06.04.88 Patentblatt 88/14**

(45) Bekanntmachung des Hinweises auf die
Patenterteilung:
**12.09.90 Patentblatt 90/37**

(84) Benannte Vertragsstaaten:
**DE FR GB IT SE**

(56) Entgegenhaltungen:
**DE-A-2 709 464**
**DE-A-2 719 200**

(73) Patentinhaber: **ROBERT BOSCH GMBH**
**Postfach 50**
**D-7000 Stuttgart 1 (DE)**

(72) Erfinder: **HOPPE, Willy**
**Benz-Meisel-Str. 4**
**D-7590 Achern 12 (DE)**
Erfinder: **STEINMANN, Helmut**
**Höllhäuserweg 66**
**D-7570 Baden-Baden (DE)**

Courier Press, Leamington Spa, England.

## Beschreibung

### Stand der Technik

Die Erfindung geht aus von einer Steuerschaltung für einen Elektromotor nach der Gattung des Hauptanspruches. Aus der Firmenschrift: "Spannungsregler mit Applikationen", Seite 111 bis 118, Astronic, Winzererstraße 47d, 8000 München 40, 1982 ist eine derartige Schaltungsanordnung bekannt, die in Abhängigkeit von der Amplitude und der Polarität eines analogen Eingangssignals ein bidirektionales Impulssignal an zwei Ausgängen generiert. Diese Schaltungsanordnung wird in Form einer integrierten Schaltung angeboten. Sie wird in elektromotorisch gesteuerten Servosystemen und zur Drehzahlsteuerung von Elektromotoren verwendet. Der integrierte Schaltkreis enthält einen Dreiecksspannungs-Generator, eine Ansteuerschaltung für den Dreieckspannungs-Generator und zwei Komparatoren. Die Impulsbreitenmodulation erfolgt durch eine Addition der Dreiecksspannung und des analogen Ansteuersignals, und einen anschließenden Vergleich des resultierenden Signals mit einer oberen und einer unteren Schwelle mit Hilfe der beiden Komparatoren. Hierbei besteht zwischen dem analogen Ansteuersignal und der Impulsbreite stets eine lineare Beziehung.

Aus der DE—A—2 709 464 ist weiters eine Steuerschaltung für einen Elektromotor bekannt, wobei die Drehrichtung und die Drehzahl des Motors in Abhängigkeit von einem Signal, welches sich aus einem Gleichspannungs φ und einem impulsförmigen Anteil zusammensetzt, gesteuert wird.

Wenn das resultierende Signal oberhalb einer ersten Signalschwelle liegt, wird der Motor in einer Drehrichtung angetrieben, wenn das resultierende Signal unterhalb einer zweiten Schwelle liegt, bewegt sich der Motor in entgegengesetzter Richtung. Die Drehzahl wird mittels Impulsbreitenmodulation gesteuert.

### Vorteile der Erfindung.

Die erfindungsgemäße Steuerschaltung mit den kennzeichnenden Merkmalen des Anspruches 1 hat demgegenüber den Vorteil, daß eine Impulsbreitenmodulation mit einer einfacheren Schaltung erfolgt, wobei zwischen dem analogen Ansteuersignal und der Impulsbreite eine nichtlineare Beziehung vorgebbar ist.

Die Steuerschaltung enthält wenig Bauelemente und ermöglicht deshalb einen kostengünstigen Aufbau in Serienprodukten. Sie eignet sich besonders für die Anpassung der mittleren Verstellgeschwindigkeit eines Stellmotors an die Höhe des analogen Ansteuersignals, welches beispielsweise eine Führungsgröße oder das Regelabweichungssignal eines Stellreglers sein kann. Im Bereich kleiner Abweichungen zwischen Ist- und Sollwert der Motordrehzahl bietet die Nichtlinearität den Vorteil einer schnellen Beseitigung der Abweichung ohne Gefahr des Überschwingens über den Sollwert hinaus.

Weitere Einzelheiten und vorteilhafte Weiterbildungen der erfindungsgemäßen Steuerschaltung ergeben sich aus den Unteransprüchen in Verbindung mit der folgenden Beschreibung.

### Zeichnung

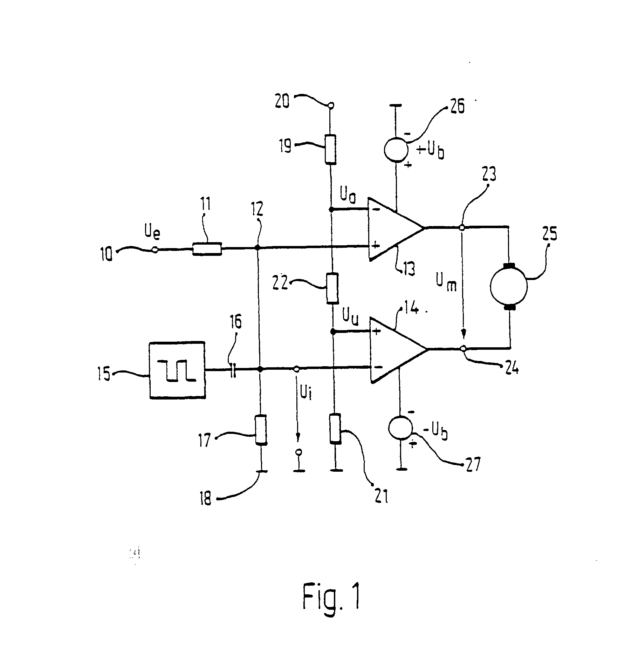

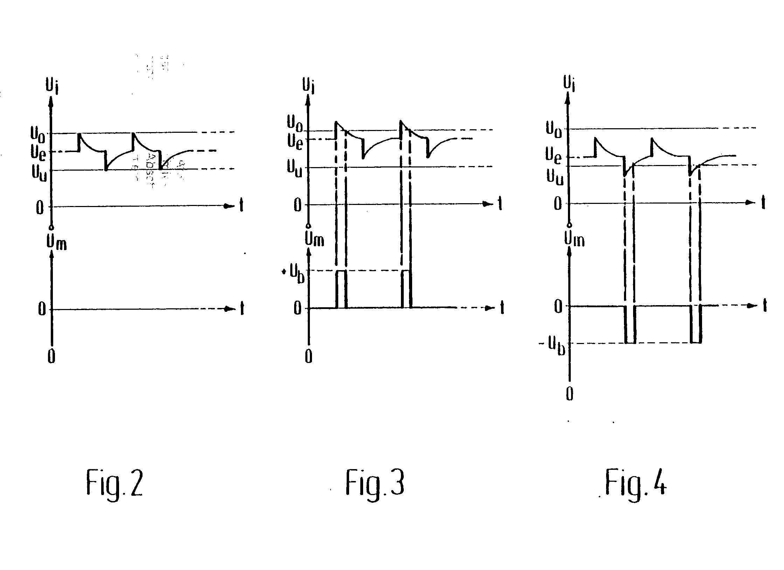

Figur 1 zeigt ein Schaltbild der erfindungsgemäßen Steuerschaltung, die Figure 2 bis 4 die Motorspannung in Abhängigkeit von einer internen Signalspannung.

### Beschreibung des Ausführungsbeispiels

Im Schaltbild (Figur 1) der Steuerschaltung gelangt ein Ansteuersignal Ue an eine Eingangsklemme 10 und danach über einen Widerstand 11 an einen Knotenpunkt 12. Am Knotenpunkt 12 sind der nicht-invertierende Eingang eines ersten Operationsverstärkers 13 und der invertierende. Eingang eines zweiten Operationsverstärkers 14 angeschlossen. Das Signal eines Rechteckgenerators 15 liegt über einen Kondensator 16 am Knotenpunkt 12. Der Knotenpunkt 12 ist weiterhin über einen Widerstand 17 mit einer Schaltungsmasse 18 verbunden. Der invertierende Eingang des ersten Operationsverstärkers 13 ist über einen Widerstand 19 mit einer Versorgungsspannung der Steuerschaltung am Anschluß 20 und der nich-invertierende Eingang des zweiten Operationsverstärkers 14 über einen Widerstand 21 mit der Schaltungsmasse 18 verbunden. Zwischen dem invertierenden Eingang des ersten Operationsverstärkers 13 und dem nicht-invertierenden Eingang des zweiten Operationsverstärkers 14 liegt ein Widerstand 22. Zwischen den Ausgang 23 des ersten Operationsverstärkers 13 und den Ausgang 24 des zweiten Operationsverstärkers 14 ist ein Elektromotor 25 geschaltet. Eine erste Spannungsquelle 26 liegt zwischen ersten Operationsverstärker 13 und Schaltungsmasse 18. Eine zweite Spannungsquelle 27 liegt zwischen zweiten Operationsverstärkers 14 und Schaltungsmasse 18.

Die erfindungsgemäße Steuerschaltung wirkt folgendermaßen:

Am Knotenpunkt 12 tritt eine Addition des abgeschwächten Ansteuersignales Ue an der Eingangsklemme 10 mit einer impulsförmigen Spannung auf. Die Abschwächung des Ansteuersignals Ue ist durch eine Spannungsteilerschaltung der beiden Widerstände 11, 17 festgelegt. Die impulsförmige Spannung wird nach Differentiation der Ausgangspannung des Rechteckgenerators 15 mit Hilfe des Kondensators 16 und des Widerstandes 17 erhalten. Die impulsförmige Spannung besteht aus positiven und negativen Nadelimpulsen mit einem anschließenden exponentiell abklingenden Verlauf, wobei die Nadelimpulse bei den ansteigenden und fallenden Flanken des Rechtecksignals auftreten. Der exponentiell abklingende Verlauf hängt von den Werten des Kondensators 16 und der Parallel-Ersatzschaltung ber beiden Widerstände 11, 17 ab. Diese interne Signalspannung Ui am Knotenpunkt 12 liegt auch am nicht-invertierenden Eingang des ersten Operationsverstärkers 13 und am invertierenden Eingang des zweiten Operationsverstärkers 14, die beide als Komparator beschaltet sind. Die Schaltschwelle der beiden Komparatoren ist durch eine Spannungsteilerschaltung aus den drei in Serie geschalteten Widerständen 19, 22, 21 abgeleitet, die zwischen der Versorgungsspannung der Steuerschaltung am Anschluß 20 und der Schaltungsmasse 18 geschaltet ist. Die obere Schwellenspannung Uo tritt zwischen den beiden Widerständen 19, 22 auf und liegt am invertierenden Eingang des ersten Operationsverstärkers 13. Die untere Schwellenspannung Uu tritt zwischen den Widerständen 21, 22 auf und liegt am nichtinvertierenden Eingang des zweiten Operationsverstärkers 14.

Der Ausgang der beiden Operationsverstärker 13, 14 ist jeweils als Leistungs-Halbbrücken-Schaltung ausgebildet. Der Elektromotor 25 wird über diese Leistungs-Halbbrücken entweder an keine oder an jeweils eine von den beiden Spannungsquellen 26, 27 gelegt. Die genaue Ansteuerung des Elektromotors 25 wird anhand der Figuren 2 bis 4 erklärt:

Figur 2 zeigt den Fall, daß der Elektromotor 25 keine Energie erhält. Liegt die interne Signalspannung Ui innerhalb des Spannungsbereichs, der durch die obere Schaltschwelle Uo und die untere Schaltschwelle Uu gegeben ist, dann liegt der Ausgang 23, 24 beider Operationsverstärker 13, 14 and der Schaltungsmasse 18.

Figur 3 zeigt den Fall einer positiven Verschiebung des Ansteuersignales Ue an der Eingangsklemme 10. Die positiven "Nadeln" der internen Signalspannung Ui überschreiten die obere Schaltschwelle Uo des ersten als Komparator beschalteten Operationsverstärkers 13. Solange die obere Schaltschwelle Uo des ersten Operationsverstärkers 13 überschritten ist, ist dessen Ausgang 23 mit der Spannungsquelle 26 verbunden. Der Ausgang 24 des zweiten Operationsverstärkers 13 liegt weiterhin an der Schaltungsmasse und so liegt am Elektromotor 25 die Spannung Um für eine bestimmte Laufrichtung, die etwa gleich der Spannung der ersten Spannungsquelle 26 ist.

Figur 4 zeigt den Fall einer negativen Verschiebung des Ansteuersignals and der Eingangsklemme 10. Unterschreitet die interne Signalspannung Ui die untere Schaltschwelle Uu des zweiten als Komparator beschalteten Operationsverstärkers 14, dann ist dessen Ausgang 24 mit der zweiten Spannungsquelle 27 verbunden. Der Ausgang 23 des ersten Operationsverstärkers 13 liegt an der Schaltungsmasse 18. Am Elektromotor 25 liegt die Spannung Um für die entgegengesetzte Laufrichtung, die etwa gleich der Spannung der zweiten Spannungsquelle 27 ist.

Die nicht-lineare Beziehung zwischen Ansteuersignal und Impulsbreite kommt folgendermaßen zustande: Wird die obere oder die untere Schaltschwelle wie in Figur 3 oder 4 gezeigt, nur geringfügig über- bzw. unterschritten, dann wird eine vergleichsweiser kurzer Energieversorgungsimpuls in positiver bzw. negativer Richtung erzeugt. Ein stärkeres Über-bzw. Unterschreiten der Schaltschwellen führt dagegen zu einem vergleichsweise langen positiven bzw. negativen Energieversorgungsimpuls. Kleine Abweichungen des Istwertes der Drehzahl des Elektromotors 25 vom Sollwert werden demnach gewissermaßen "sanft" ausgeregelt. Größere Abweichungen dagegen führen zu einer schnelleren Nachführung.

Die Nichtlinearität hängt von dem exponentiellen Abfall der impulsförmigen Spannung ab. Er ist bestimmt durch den Wert des Kondensators 16, den Wert des Widerstandes 17 und den Wert des Widerstandes 11, der wechselspannungsmäßig ebenfalls an der Schaltungsmasse 18 liegt. Die Amplitude der positiven und der negativen Nadelimpulse hängt zusätzlich noch von der Amplitude der Rechteckspannung sowie deren Frequenz ab. Die Frequenz der Rechteckspannung wird so gewählt, daß sich an der induktiven Last, die der Elektromotor 25 neben einer Wirklast darstellt, ein nichtlückender Stromverlauf einstellt.

**Patentansprüche**

1. Steuerschaltung für einen Elektromotor (25) dessen Drehrichtung und Drehzahl von einem Steuersignal (Ue) gesteuert ist, wobei die Drehrichtung vom Unter- bzw. Überschreiten eines bestimmten Steuersignalpegels (Uo, Uu) gesteuert und die Drehzahl durch Impulsbreitenmodulation des Steuersignals gesteuert ist, dadurch gekennzeichnet, daß

a) der Elektromotor (25) nur dann mit einer ersten Spannungsquelle (26) verbunden ist, wenn ein resultierendes Signal (12) aus einer Überlagerung des Ansteuersignals Ue mit einem impulsförmigen Signal oberhalb einer oberen Schwelle (Uo) liegt, wobei die erste Spannungsquelle (26) die Antriebsenergie für eine Drehrichtung liefert, daß

b) der Elektromotor (25) nur dann mit einer zweiten Spannungsquelle (27) verbunden ist, wenn das resultierende Signal unterhalb einer unteren Schwelle (Uu) liegt, wobie die zweite Spannungsquelle (27) die (Uu) Antriebsenergie für die entgegengesetzte Drehrichtung liefert, daß

c) zur Erzeugung des impulsförmigen Signals ein Rechtecksignalgenerator (15) und ein aus einer Kondensator-Widerstands-Hochpaßschaltung gebildetes Differenzierglied (16, 17) vorgesehen sind und daß

d) weitere Schaltmittel (11) vorgesehen sind, die in Verbindung mit dem Differenzierglied (16, 17) eine nichtlineare Beziehung zwischen dem Ansteuersignal (Ue) und der Pulsbreite herstellen.

2. Steuerschaltung nach Anspruch 1, dadurch gekennzeichnet, daß die obere Schwelle (Uo) durch eine erste Referenzspannung am invertierenden Eingang eines ersten als Komparator beschalteten Operationsverstärkers (13), und die untere Schwelle (Uu) durch eine zweite Referenzspannung am nichtinvertierenden Eingang eines zweiten als Komparator beschalteten Operationsverstärkers (14) festgelegt ist.

3. Steuerschaltung nach Anspruch 1, dadurch gekennzeichnet, daß die erste und zweite Referenzspannung mittels einer Spannungsteileranordnung (19, 21, 22) gegeben ist.

4. Steuerschaltung nach Anspruch 1, dadurch gekennzeichnet, daß die der Elektromotor (25) am Ausgang des ersten und zweiten jeweils als Komparator beschalteten Operationsverstärkers (13, 14) angeschlossen ist, der jeweils eine Leistungs-Halbbrücken-Ausgangsstufe enthält.

**Revendications**

1. Circuit de commande pour moteur électrique (25), dont le sens de rotation et la vitesse de rotation sont commandés par un signal de commande (Ue), le sens de rotation étant commandé par le franchissement en montée en ou descente d'un niveau déterminé (Uo, Uu) de signal de commande et la vitesse de rotation étant commandée par une modulation de la largeur d'impulsion du signal de commande, circuit caractérisé en ce que;
a) le moteur électrique (25) n'est relié à une première source de tension (26) que lorsqu'un signal résultant (12) provenant de la superposition du signal de commande (Ue) et d'un signal en forme d'impulsion est située au-dessus d'un seuil supérieur (Uo), la première source de tension (26) fournissant l'énergie d'entraînement correspondant à un sens de rotation,
b) le moteur électrique (25) n'est relié à une deuxième source de tension (27) que lorsque le signal résultant est situé au-dessous d'une seuil inférieur (Uu), la deuxième source de tension (27) fournissant l'énergie d'entraînement pour le sens de rotation opposé,
c) un générateur de signal rectangulaire (15) et un organe différentiateur (16, 17) formé d'un circuit passe-haut à résistance et condensateur sont prévus pour produire le signal en forme d'impulsion, et
d) il est prévus des moyens de commutation (11) supplémentaires, qui établissent une relation non linéaire entre le signal de commande (Ue) et la largeur d'impulsion, en liaison avec l'organe différentiateur (16, 17).

2. Circuit de commande selon la revendication 1, caractérisé en ce que le seuil supérieur (Uo) est fixé par une première tension de référence à l'entrée inversive d'un premier amplificateur opérationnel (13), branché pour servir de comparateur, et que le seuil inférieur (Uu) est fixé par une deuxième tension de référence à l'entrée non-inversive d'un deuxième amplificateur opérationnel (14) branché pour servir de comparateur.

3. Circuit de commande selon la revendication 1, caractérisé en ce que la première et la deuxième tension de référence sont fournies au moyen d'un dispositif diviseur de tension (19, 21, 22).

4. Circuit de commande selon la revendication 1, caractérisé en ce que le moteur électrique (25) est raccordé à la sortie du premier et du second amplificateur opérationnel (13, 14), qui contient chaque fois un étage de sortie de puissance à demi-pont.

**Claims**

1. Control circuit for an electric motor (25), the direction of rotation and speed of which is controlled by a control signal (Ue), the direction of rotation being controlled by the control signal dropping below or exceeding, respectively, a particular level (Uo, Uu), and the speed being controlled by pulse-width modulation of the control signal, characterized in that
a) the electric motor (25) is only connected to a first voltage source (26) when a resultant signal (12) of a superimposition of the drive signal (Ue) and a pulse-shaped signal is above an upper threshold (Uo), the first voltage source (26) supplying the drive power for a direction of rotation, in that
b) the electric motor (25) is only connected to a second voltage source (27) when the resultant signal is located below a lower threshold (Uu), the second voltage source (27) supplying the drive power for the opposite direction of rotation, in that
c) a rectangular-signal generator (15) and a differentiating section (16, 17) formed of a capacitor-resistor-high-pass circuit are provided for generating the pulse-shaped signal, and in that
d) further switching means (11) are provided which, in conjunction with the differentiating section (16, 17), produce a non-linear relation between the drive signal (Ue) and the pulse width.

2. Control circuit according to Claim 1, characterized in that the upper threshold (Uo) is determined by a first reference voltage at the inverting input of a first operational amplifier (13) connected as comparator, and the lower threshold (Uu) is determined by a second reference voltage at the non-inverting input of a second operational amplifier (14) connected as comparator.

3. Control circuit according to Claim 1, characterized in that the first and second reference voltage is given by means of a voltage divider arrangement (19, 21, 22).

4. Control circuit according to Claim 1, characterized in that the electric motor (25) is connected to the output of the first and second operational amplifier (13, 14), in each case connected as comparator, which in each case contains a power half-bridge output stage.

Fig. 1

Fig.2

Fig.3

Fig.4